# EUROPEAN PATENT SPECIFICATION

(11) **EP 2 583 836 B1**
(45) Date of publication and mention of the grant of the patent: **16.07.2014**
(21) Application number: 12188048.8
(22) Date of filing: 10.10.2012
(51) Int. Cl.: B60B 27/00, F16C 19/18, F16C 23/06, F16C 25/06

(54) **A method for assembling a wheel hub bearing unit**
Verfahren zur Montage einer Radnabenlagereinheit
Procédé d'assemblage d'une unité de roulement de moyeu de roue

(30) Priority: 19.10.2011 IT TO20110949
(43) Date of publication of application: 24.04.2013
(73) Proprietor: Aktiebolaget SKF, 415 50 Göteborg (SE)
(72) Inventor: Olivieri, Davide Antonio, I-10137 Torino (IT); Re, Paolo, I-10042 Nichelino (TO) (IT); Sguotti, Laura, I-15062 Bosco Marengo (AL) (IT); Gulli', Carmelo, I-10129 Torino (TO) (IT); Knopf, Andreas, 97074 Würzburg (DE)
(74) Representative: Tedeschini, Luca

(56) References cited:
- EP-A1- 1 978 270
- WO-A1-2007/145005
- JP-A- 9 196 605

## Description

### BACKGROUND OF THE INVENTION

The present invention relates to a method of assembling a wheel hub bearing unit, according to the preamble of claim 1 and as it is disclosed in EP 1 978 270 A1.

In general, the wheel hub bearing units of known design are provided with an axis of rotation and comprise:
- a dual row of rolling elements arranged side by side along the axis of rotation;
- an outer ring with two raceways for the two rows of rolling elements;
- a flanged ring comprising an attachment flange for a wheel of a vehicle and a cylindrical body which is integral with the flange and provides, on an outer surface, a raceway for a relative row of rolling elements;
- an inner ring mounted on the flanged ring on the opposite side of the flange and provided with a respective raceway for a relative row of rolling elements, and
- an axial locking member for locking the inner ring with respect to the flanged ring.

In most applications of the wheel hub bearing unit described above and used in the automotive industry, the inner ring is mounted on a tubular extension of the cylindrical body and abuts against a shoulder of the flanged ring so as to leave an axially protruding end portion of the tubular extension beyond an annular outer surface of the inner ring. With these applications, the axial locking member is made by cold roll forming the end portion against the outer annular surface of the inner ring.

The rolled edge, although having proved to be very reliable as an axial locking member, does not only determine an increase of the axial dimensions of the entire wheel hub bearing unit, but also leads to an increase in the overall weight of the wheel hub bearing unit. Moreover, despite the technological progress made in cold rolling, the correct determination of the axial preload on the two rows of balls has always proved to be a rather critical operation to be performed with great caution, often at the expense of the manufacturing speed of the wheel hub bearing unit.

Finally, in the automotive industry, especially as a result of new standards in terms of CO2 emissions, there is an ever increasing need for components being lighter and less bulky.

### SUMMARY OF THE INVENTION

It is therefore an object of the present invention to provide a wheel hub bearing unit, which, without having to renounce to the capability of locking of the inner ring of known units, permits not only a reduction in terms of axial dimensions and weight, but also an easier application of the axial preload on the unit.

According to a first aspect, the present invention proposes an assembling method as defined in claim 1. According to a further aspect of the invention, there is provided a wheel hub-bearing unit having the features set forth in the appended claims.

### BRIEF DESCRIPTION OF THE DRAWINGS

The invention will now be described with reference to the accompanying drawings, showing some exemplary, non-limiting embodiments, in which:
- Figure 1 is a cross-sectional view in a longitudinal plane of a first preferred embodiment of a wheel hub bearing unit according to the present invention;
- Figure 2 is a cross-sectional view in a longitudinal plane of a second preferred embodiment of a wheel hub bearing unit;
- Figure 3 is a sectional view of a longitudinal plane of a third preferred embodiment of a wheel hub bearing unit;
- Figure 4 is a sectional view of a longitudinal plane, with parts removed for clarity and on an enlarged scale, of a preferred embodiment of a detail of the wheel hub bearing unit of Figure 3.

### DETAILED DESCRIPTION OF PREFERRED EMBODIMENTS

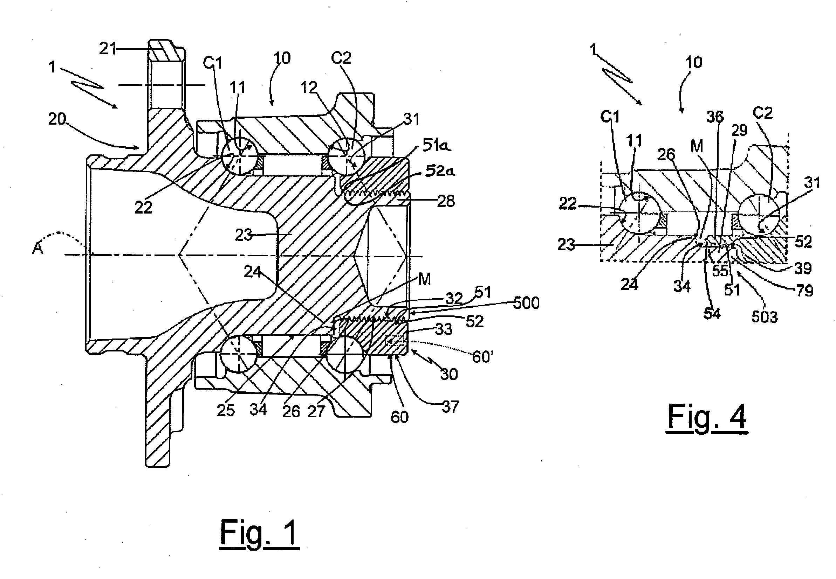

With reference to Figure 1, numeral 1 designates as a whole a wheel hub bearing unit. The unit 1 is provided with an axis A of rotation and comprises:
- two rows C1 and C2 of rolling elements, preferably but not necessarily bearing balls, axially arranged side by side along the axis A;
- an outer ring 10 provided with two raceways 11 and 12 for the rows C1 and C2, respectively;
- a flanged ring 20, which is provided with a flange 21 transversal to the axis A, for supporting a vehicle wheel (not shown) and a cylindrical body 23 integral with the flange 21 and externally provided with a raceway 22 for the row C1.

Since the flange 21 identifies the so-called "outboard side" of unit 1, and the row C1 is arranged close to the flange 21, the row C1 is usually called "outboard row" of the unit 1, while, consequently, the row C2 is called "inboard row" of the unit 1. Similarly, unless otherwise specified in the ensuing description, terms such as "inboard" and "outboard" will be used with the same meaning have explained herein above.

The cylindrical body 23 extends along axis A from the flange 21 and through the outer ring 10, and is provided with a shoulder 24, The shoulder 24 is identified, on the side of the row C1, by a cylindrical surface 25 having an inner diameter substantially equal to a diameter of the bottom of the raceway 22. On the side of the row C2, the shoulder 24 is defined by an annular front surface 26 and a cylindrical surface 27 having a diameter which is less than the diameter of the cylindrical surface 25. In the embodiment illustrated in Figure 1, the surface 27 externally delimits a tubular extension 28 of the cylindrical body 23.

Furthermore, the unit 1 comprises an inner ring 30 which is mounted on the tubular extension 28 of the flanged ring 20 and provides a respective raceway 31 for the row C2. In other words: the outboard row C1 is received between the raceways 11 and 22, while the row C2 is received between the raceways 12 and 31, and the mutual position of raceways 11 and 22 and the raceways 12 and 31 is such that the rings 10, 20 and 30 together with the rows C1 and C2 are configured as a double row, angular contact ball bearing.

Setting the preload in a double row, angular contact ball bearing of the above described type is done by bringing flanged ring 20 and the inner ring 30 axially close to one another while locking the inner ring 30 on the flanged ring 20, so as to compress the bearing balls of rows C1 and C2 within the respective pairs of raceways 11 and 22, and 12 and 31.

The unit 1 finally comprises an axial locking device 500, which locks the inner ring 30 with respect to flanged ring 20 and comprises, in the embodiment illustrated in Figure 1, a helical ridge 51 made on a cylindrical inner surface 32 of ring 30 and an inner helical groove 52 made or formed in the surface 27. In a preferred embodiment, the cylindrical surface 27 is initially smooth. The groove 52 has a shape complementary to a shape of the helical ridge 51 and is formed during the assembly of the inner ring 30. In fact, the latter is a heat-treated ring and has a hardness of magnitude greater than a hardness of the material constituting at least the tubular extension 28.

The progressive engagement of the ridge 51 in the groove 52, i.e. the progressive carving of the groove 52 by the ridge 51 during the coupling of ring 30 on the tubular portion 28, allows to locate the inner ring 30 in a locking position against the relative row C2 so as to exert a preload force on the two rows C1 and C2 proportional to a tightening torque applied to the inner ring 30 while screwing it onto the flanged ring 20. The helical ridge 51 and the helical groove 52 have each a respective end 51a, 52a situated on the side closer to the first raceway 22; once the tightening of inner ring 30 is completed, the ends 51a and 52a coincide.

In its locking position, the inner ring 30 defines with the surface 26 of the shoulder 24, a gap M of given axial length which is set so as to prevent axial contact between the inner ring 30 and the flanged ring 20. In this way, it will suffice to set the tightening torque of the inner ring 30 on the flanged ring 20 so as to set the preloading force on the two rows C1 and C2 with absolute accuracy. To this end, the inner ring 30 comprises two (or more) diametrically opposite flat portions (or flats) 60 formed on an outer cylindrical surface 37 of the inner ring 30, or provides two or more axial blind holes 60' made through an axially inner annular surface 33 of the same inner ring 30. The flat portions 60 do not extend over the entire axial extent of the surface 37, and, similarly as the axial blind holes 60', they provide passive maneuvering elements for maneuvering the inner ring 30 on the flanged ring 20 so as to cause the helical ridge 51 to progressively engage the helical groove 52 until the inner ring 30 reaches the relative row C2 of bearing balls.

In the embodiment illustrated in Figure 1, the cylindrical inner surface 32 of the ring 30 is an inner single-diameter surface and covers the entire axial length of the ring 30, extending from the annular surface 33 to an annular, axially outer surface 34 of the same inner ring 30 facing the shoulder 24. Therefore, the helical ridge 51 extends along the entire axial length of the inner ring 30 ensuring a high contact surface with the groove 52 and a very reduced, if not practically nil, possibility that the inner ring 30 may come off the flanged ring 20.

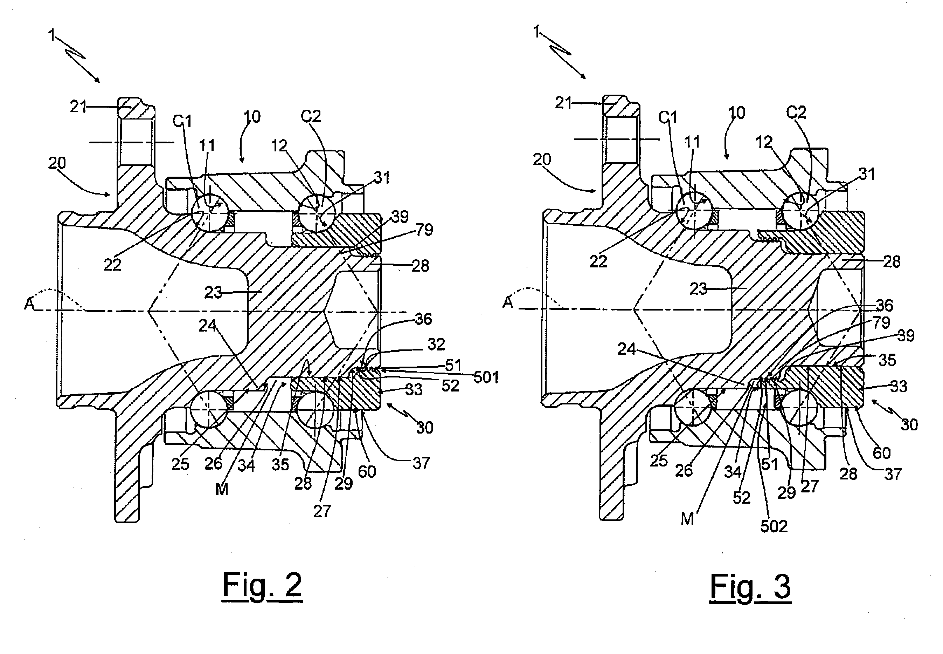

The embodiment illustrated in Figure 2 relates to a device 501 similar to device 500, by which the device 501 differs in that the cylindrical inner surface 32 of the ring 30 has an internal surface with a double diameter, and comprises a smooth centering portion 35 and an engagement portion 36 providing the helical ridge 51.

Also the cylindrical outer surface 27 is a double diameter surface and comprises a respective smooth centering portion 28 predominantly located on the body 23, and a respective engagement portion 29 providing the helical groove 52 and located on the tubular extension 28.

In the device 501, the centering portion 35 is arranged axially outwardly of the engagement portion 36 and radially inwardly of the raceway 31. The centering portion 35 has a diameter and an axial length both being larger than the diameter and the axial length, respectively, of the locking portion 36.

The different sizes in diameter between the centering portion 35 and the locking portion 36, as well as between the centering portion 28 and the engagement portion 29, allow to make an annular step 39 on the inner ring 30 and an annular step 79 on the body 23, wherein the annular step 79 as a radial height which is shorter than the radial height of shoulder 24.

With the inner ring 30 in its locked position, the relative centering portion 35 is arranged in direct contact with the centering portion 28 of the flanged ring 20, thereby ensuring a correct positioning of the inner ring 30 with respect to the flanged ring 20 and also with respect to the axis A, while the corresponding engagement portion 36 will be engaged with the engagement portion 29 of the flanged ring 20 in order to lock the inner ring 30 inside the flanged ring 20. In this locking position, the two steps 39 and 79 are located axially facing one another and not in contact with each other, as well as the surface 34 and the surface 26 which will continue to define therebetween a gap M of crucial importance in setting the preload.

In fact, once the centering portion 35 is fitted on the centering portion 28, thereby providing for an initial centering of the inner ring 30 on the body 23, progressive engagement of the engagement portion 36 with the engagement portion 29 causes, firstly, the raceway 31 to come in contact initially with the row C2, then brings the inner ring 30 to be fully centered on the body 23, and finally allows a progressive preloading to be applied to the unit 1, depending on the torque applied to the ring 30.

Moreover, the step 39 does not only allow a rapid machining of the portion 36, but also prevents the raceway 31 from being affected either by any deformation induced in the ring 30 due to the machining steps for forming the ridge 51 in the portion 36, and also by any deformation and stress which the ring 30 is subjected to during the assembly of the unit 1. In fact, in order to form the groove 52, it is necessary to plastically deform the material of the body 23 and, therefore, the stress being imparted reaches rather high values: the step 39 gives the advantage of isolating the raceway 31 from the stress that is generated. Furthermore, it will be appreciated that in the embodiment of Figure 2, the engagement portion 36 in which the helical ridge 51 is formed is the thickest portion of the inner ring 30, and therefore is the least deformable portion, and the farthest from the raceway 31. Therefore, the stress induced in raceway 31 is reduced to a minimum or negligible level, both during the machining step of forming the ridge 51, and during the step of assembling the inner ring 30 on the flanged ring 20.

Although the axial length of the portion 36 does cover the whole axial length of the inner ring 30, as previously described and shown for the embodiment of Figure 1, the mutual axial locking between the inner ring 30 and the flanged ring 20 is always guaranteed by the fact that the inner ring 30 is forced on the flanged ring 20, i.e. on the tubular portion 28, obtaining progressively the groove 52.

The embodiment illustrated in Figure 3 relates to a device 502 similar to the device 501, from which the device 502 differs due to the fact that, in the inner ring 30, the centering portion 35 is located axially inwardly of the locking portion 36 and has a diameter smaller than the diameter of the locking portion 36. Furthermore, in the device 502, the centering portion 35 has an axial length larger than an axial length of the locking portion 36, and extends in either axial direction beyond the axial position of the raceway 31 on the inner ring 30. This arrangement provides an extremely accurate concentricity between the inner ring 30 and the flanged ring 20.

Differently from the device 501, where the raceway 31 is located in an axially intermediate position between the surface 34 and the annular step 39, in the device 502 the raceway 31 is arranged in a position axially intermediate between the surface 33 and the annular step 39, i.e. on the radially thicker part of the inner ring 30 rather than on the radially thinner part, making unit 1 in its different variants extremely versatile.

Even in the case of the device 502, the presence of the step 39 substantially prevents the raceway 31 from being affected by any deformation induced in the ring 30 due to the machining of the ridge 51. At the same time, the substantial correspondence of the axial positions of the raceway 31 and the centering portion 35 of the ring 30 allows the inner raceway 31 to transfer Hertzian stresses caused by the movement of the rolling elements around the axis A to a cylinder-on-cylinder type of contact, which is homogeneous.

The embodiment shown in Figure 4 relates to a device 503 similar to device 502, from which the device 503 differs in that it comprises, furthermore, an annular protuberance 54, which axially delimits the engagement portion 36 on the side opposite side to the step 39, and is axially bounded by the surface 34. The protuberance 54 has a radial end 55, preferably but not necessarily rounded, which is positioned in contact with portion 29 and seals the helical ridge 51 with respect to the gap M in such a way that, while the inner ring 30 is being assembled, any chips deriving from the formation of the groove 52 cannot be disseminated within the rings 10 and 20 and between the raceways 22 and 31, but remain enclosed between the protuberance 54 and the shoulder 39.

The protuberance 54 has an axial thickness larger than an average axial dimension of the helical ridge 51 so as to confer also a certain rigidity and strength to the engagement portion 36. Preferably, the annular protuberance 54 has an inner diameter such as to generate a slight radial interference with the cylindrical surface 27 on which the helical groove 52 is formed.

The unit 1 bearing wheel hub in the variants described above also allows to significantly simplify the entire manufacturing process of the unit 1. As stated herein above, since it is possible to set preloading values by acting directly on unit 1, it is no longer necessary to provide a coupling step of the components (outer ring with inner rings and rolling elements) of the unit 1 as done heretofore. The exclusion of such a step does not only involve a speeding up of the manufacturing of the unit 1, but also allows to eliminate the steps of measuring the components in order to allow, precisely, a correct coupling.

## Claims

1. A method for assembling a wheel hub bearing unit (1) the, the method comprising the steps of:
- providing two rows (C1, C2) of rolling elements;
- providing an outer ring (10) forming two raceways (11, 12) for the two rows (C1, C2) of rolling bodies;
- providing a first inner ring (20) forming a first internal raceway (22) for a first one (C1) of the two rows (C1, C2) of rolling bodies and a cylindrical outer surface (27);
- providing a second inner ring (30) forming a second raceway (31) for a second one (C2) of the two rows (C1, C2) of rolling elements, an inner cylindrical surface (32), and a helical ridge (51) formed in the inner cylindrical surface (32);
- arranging the two rows of rolling elements (C1, C2) between the raceways (11, 12) of the outer ring (10) and (22) of the first inner ring (20);
- rotating and advancing the second ring (30) around and along the outer cylindrical surface (27) of the first inner ring (20), in such a way that:
the second inner ring (30) reaches a locking position against the second row (C2) of rolling bodies so as to exert a preload force on the two rows (C1, C2) proportional to a tightening torque applied to the second inner ring (30) to lock it on the first inner ring (20), **characterised in that**
the helical ridge (51) progressively carves a the helical ridge (51) progressively carves a helical groove (52) in the cylindrical outer surface (27).

2. The method of claim 1, wherein the cylindrical outer surface (27) of the first inner ring (20) is initially smooth.

3. A wheel hub bearing unit assembled according to the method of claim 1 or 2, wherein the second inner ring (30) in its locking position defines with an axial shoulder (24) of the first inner ring (20), a gap (M) of predetermined axial length preventing axial contact between the first inner ring (20) and the second inner ring (30).

4. A wheel hub bearing unit according to claim 3, wherein the second inner ring (30) includes maneuvering means (60, 60'), formed either or on a cylindrical outer surface (35) or an annular axially inner surface (33) of the same second inner ring (30), for maneuvering the second inner ring (30) so as to make it rotate and advance to carve progressively the helical groove (52).

5. A wheel hub bearing unit according to claim 3 or 4, wherein the inner surface (32) is a cylindrical, single-diameter surface extending along an entire axial length of the second inner ring (30).

6. A wheel hub bearing unit according to claim 3 or 4, wherein the inner surface (32) is a double diameter cylindrical surface comprising a first centering portion (35) and a first engagement portion (36) providing the helical ridge (51).

7. A wheel hub bearing unit according to claim 6, wherein the cylindrical outer surface (27) is a double diameter surface and comprises a second centering portion (28) of a shape complementary to a shape of the first centering portion (35), and a second engagement portion (29) providing the helical groove (52); the first and the second centering portions (35, 28) abutting each other in radial contact for centering the second inner ring (30) with respect to the first inner ring (20).

8. A wheel hub bearing unit according to claim 6 or 7, wherein the first centering portion (35) is arranged between the shoulder (24) and the first engagement portion (36), and has a diameter larger than a diameter of the first engagement portion (36).

9. A wheel hub bearing unit according to claim 6 or 7, wherein the first centering portion (35) is arranged on the opposite side of the first engagement portion (36) with respect to the shoulder (24) and has a diameter smaller than a diameter of the first engagement portion (36).

10. A wheel hub bearing unit according to claim 8, further comprising a sealing annular element (54), which axially delimits the first engagement portion (36) and is arranged in contact with the second engagement portion (29) for sealing of the helical ridge (51) with respect to the inside of the wheel hub bearing unit (1).

11. A wheel hub bearing unit according to any one of claims 3 to 10, wherein the helical ridge (51) and the helical groove (52) each have a respective end (51a, 52a) located on a side closer to the first raceway (22), said ends being coincident.

## Patentansprüche

1. Verfahren zur Montage einer Radnabenlagereinheit (1), wobei das Verfahren die folgenden Schritte aufweist:
- Bereitstellen von zwei Reihen (C1, C2) rollender Elemente,
- Bereitstellen eines Außenrings (10), der zwei Laufringe (11, 12) für die zwei Reihen (C1, C2) rollender Körper bildet,
- Bereitstellen eines ersten Innenrings (20), der einen ersten inneren Laufring (22) für eine erste (C1) der zwei Reihen (C1, C2) rollender Körper und eine zylindrische Außenoberfläche (27) bildet,
- Bereitstellen eines zweiten Innenrings (30), der einen zweiten Laufring (31) für eine zweite (C2) der zwei Reihen (C1, C2) rollender Elemente bildet, eine innere zylindrische Oberfläche (32) und eine schraubenförmige Kante (51), die in der inneren zylindrischen Oberfläche (32) ausgebildet ist,
- Einrichten der zwei Reihen rollender Elemente (C1, C2) zwischen den Laufringen (11, 12) des Außenrings (10) und (22) des ersten Innenrings (20),
- Drehen und Vorwärtslaufen des zweiten Rings (30) um und entlang der zylindrischen Außenoberfläche (27) des ersten Innenrings (20), derart, dass,
der zweite Innenring (30) eine Verriegelungsposition gegen die zweite Reihe (C2) rollender Körper erreicht, um eine Vorspannkraft auf die zwei Reihen (C1, C2) auszuüben, die proportional zu einem Anziehdrehmoment ist, das an den zweiten Innenring (30) angelegt wird, um ihn auf dem ersten Innenring (20) zu verriegeln, **dadurch gekennzeichnet, dass**
die schraubenförmige Kante (51) allmählich eine schraubenförmige Hohlkehle (52) in die zylindrische Außenoberfläche (27) schneidet.

2. Verfahren nach Anspruch 1, wobei die zylindrische Außenoberfläche (27) des ersten Innenrings (20) ursprünglich glatt ist.

3. Radnabenlagereinheit, die gemäß dem Verfahren des Anspruchs 1 oder 2 zusammengefügt ist, wobei der zweite Innenring (30) in seiner Verriegelungsposition mit einer axialen Schulter (24) des ersten Innenrings (20) eine Spalte (M) mit vorbestimmter axialer Länge bildet, die axiale Berührung zwischen dem ersten Innenring (20) und dem zweiten Innenring (30) verhindert.

4. Radnabenlagereinheit nach Anspruch 3, wobei der zweite Innenring (30) Manövriermittel (60, 60') aufweist, die entweder auf einer zylindrischen Außenoberfläche (35) oder einer ringförmigen axialen inneren Oberfläche (33) desselben zweiten Innenrings (30) zum Manövrieren des zweiten Innenrings (30) derart ausgebildet sind, dass er dreht und vorwärts läuft, um allmählich die schraubenförmige Hohlkehle (52) zu schneiden.

5. Radnabenlagereinheit nach Anspruch 3 oder 4, wobei die innere Oberfläche (32) eine zylindrische Oberfläche mit einem einzigen Durchmesser ist, die sich entlang einer gesamten axialen Länge des zweiten Innenrings (30) erstreckt.

6. Radnabenlagereinheit nach Anspruch 3 oder 4, wobei die innere Oberfläche (32) eine zylindrische Oberfläche mit doppeltem Durchmesser ist, die einen ersten Zentrierteil (35) und einen ersten Eingriffsteil (36), der die schraubenförmige Kante (51) bereitstellt, aufweist.

7. Radnabenlagereinheit nach Anspruch 6, wobei die zylindrische Außenoberfläche (27) eine Oberfläche mit doppeltem Durchmesser ist und einen zweiten Zentrierteil (28) mit einer Form aufweist, die zu einer Form des ersten Zentrierteils (35) komplementär ist, und einen zweiten Eingriffsteil (29), der die schraubenförmige Hohlkehle (52) bereitstellt, wobei der erste und der zweite Zentrierteil (35, 28) aneinander in radialer Berührung zum Zentrieren des zweiten Innenrings (30) in Bezug auf den ersten Innenring (20) anschlagen.

8. Radnabenlagereinheit nach Anspruch 6 oder 7, wobei der erste Zentrierteil (35) zwischen der Schulter (24) und dem ersten Eingriffsteil (36) eingerichtet ist und einen Durchmesser hat, der größer ist als ein Durchmesser des ersten Eingriffsteils (36).

9. Radnabenlagereinheit nach Anspruch 6 und 7, wobei der erste Zentrierteil (35) auf der gegenüberliegenden Seite des ersten Eingriffsteils (36) in Bezug auf die Schulter (24) eingerichtet ist und einen Durchmesser hat, der kleiner ist als ein Durchmesser des ersten Eingriffsteils (36).

10. Radnabenlagereinheit nach Anspruch 8, die ferner ein abdichtendes Ringelement (54) aufweist, das axial den ersten Eingriffsteil (36) abgrenzt und in Berührung mit dem zweiten Eingriffsteil (29) eingerichtet ist, um die schraubenförmige Kante (51) in Bezug auf die Innenseite der Radnabenlagereinheit (1) abzudichten.

11. Radnabenlagereinheit nach einem der Ansprüche 3 bis 10, wobei die schraubenförmige Kante (51) und die schraubenförmige Hohlkehle (52) jeweils ein Ende (51a, 52a) haben, das auf einer Seite liegt, die dem ersten Laufring (22) näher liegt, wobei die Enden deckungsgleich sind.

## Revendications

1. Procédé d'assemblage d'une unité de roulement de moyeu de roue (1), le procédé comprenant les étapes suivantes :
- prévoir deux rangées (C1, C2) d'éléments roulants ;
- prévoir une bague extérieure (10) formant deux chemins de roulement (11, 12) pour les deux rangées (C1, C2) de corps roulants ;
- prévoir une première bague intérieure (20) formant un premier chemin de roulement interne (22) pour une première (C1) des deux rangées (C1, C2) de corps roulants et une surface extérieure cylindrique (27) ;
- prévoir une seconde bague intérieure (30) formant un second chemin de roulement (31) pour une seconde (C2) des deux rangées (C1, C2) d'éléments roulants, une surface intérieure cylindrique (32), et une nervure hélicoïdale (51) formée dans la surface intérieure cylindrique (32) ;
- disposer les deux rangées d'éléments roulants (C1, C2) entre les chemins de roulement (11, 12) de la bague extérieure (10) et (22) de la première bague intérieure (20) ;
- faire tourner et avancer la seconde bague (30) autour et le long de la surface extérieure cylindrique (27) de la première bague intérieure (20), de telle manière que :
la seconde bague intérieure (30) atteigne une position de verrouillage contre la seconde rangée (C2) de corps roulants de façon à exercer une force de précharge sur les deux rangées (C1, C2) proportionnelle à un couple de serrage appliqué à la seconde bague intérieure (30) afin de la verrouiller sur la première bague intérieure (20), **caractérisé en ce que**
la nervure hélicoïdale (51) taille progressivement une rainure hélicoïdale (52) dans la surface extérieure cylindrique (27).

2. Procédé selon la revendication 1, la surface extérieure cylindrique (27) de la première bague intérieure (20) étant initialement lisse.

3. Unité de roulement de moyeu de roue assemblée conformément au procédé selon la revendication 1 ou 2, la seconde bague intérieure (30), dans sa position de verrouillage, définissant, avec un épaulement axial (24) de la première bague intérieure (20), un espace (M) d'une longueur axiale prédéterminée empêchant tout contact axial entre la première bague intérieure (20) et la seconde bague intérieure (30).

4. Unité de roulement de moyeu de roue selon la revendication 3, la seconde bague intérieure (30) incluant des moyens de manoeuvre (60, 60'), formés soit sur une surface extérieure cylindrique (35) soit sur une surface axialement intérieure annulaire (33) de ladite seconde bague intérieure (30), permettant de manoeuvrer la seconde bague intérieure (30) de façon à la faire tourner et avancer afin de tailler progressivement la rainure hélicoïdale (52).

5. Unité de roulement de moyeu de roue selon la revendication 3 ou 4, la surface intérieure (32) étant une surface à diamètre unique, cylindrique s'étendant le long d'une longueur axiale entière de la seconde bague intérieure (30).

6. Unité de roulement de moyeu de roue selon la revendication 3 ou 4, la surface intérieure (32) étant une surface cylindrique à double diamètre comprenant une première partie de centrage (35) et une première partie d'accouplement (36) produisant la nervure hélicoïdale (51).

7. Unité de roulement de moyeu de roue selon la revendication 6, la surface extérieure cylindrique (27) étant une surface à double diamètre et comprenant une seconde partie de centrage (28) présentant une forme complémentaire d'une forme de la première partie de centrage (35), et une seconde partie d'accouplement (29) produisant la rainure hélicoïdale (52) ; les première et seconde parties de centrage (35, 28) étant en appui l'une contre l'autre en contact radial afin de centrer la seconde bague intérieure (30) par rapport à la première bague intérieure (20).

8. Unité de roulement de moyeu de roue selon la revendication 6 ou 7, la première partie de centrage (35) étant disposée entre l'épaulement (24) et la première partie d'accouplement (36), et présentant un diamètre supérieur à un diamètre de la première partie d'accouplement (36).

9. Unité de roulement de moyeu de roue selon la revendication 6 ou 7, la première partie de centrage (35) étant disposée sur le côté opposé de la première partie d'accouplement (36) par rapport à l'épaulement (24) et présentant un diamètre inférieur à un diamètre de la première partie d'accouplement (36).

10. Unité de roulement de moyeu de roue selon la revendication 8, comprenant en outre un élément annulaire d'étanchéité (54), qui délimite axialement la première partie d'accouplement (36) et est disposé en contact avec la seconde partie d'accouplement (29) de manière à assurer l'étanchéité de la nervure hélicoïdale (51) par rapport à l'intérieur de l'unité de roulement de moyeu de roue (1).

11. Unité de roulement de moyeu de roue selon l'une quelconque des revendications 3 à 10, la nervure hélicoïdale (51) et la rainure hélicoïdale (52) comportant chacune une extrémité respective (51a, 52a) située sur un côté plus proche du premier chemin de roulement (22), lesdites extrémités coïncidant.
